# FASCICULE DE BREVET EUROPEEN

(11) **EP 2 558 537 B1**
(45) Date de publication et mention de la délivrance du brevet: **02.12.2020**
(21) Numéro de dépôt: 11720407.3
(22) Date de dépôt: 13.04.2011
(51) Int. Cl.: C08L 77/00, C08G 67/02, C08L 61/06, C08L 73/00

(54) **COMPOSITION THERMOPLASTIQUE A BASE DE POLYAMIDE, DE POLYCETONE ET DE RESINE NOVOLAQUE**
THERMOPLASTISCHE ZUSAMMENSETZUNG AUF GRUNDLAGE VON POLYAMID, POLYKETON UND NOVOLAKHARZ
THERMOPLASTIC COMPOSITION BASED ON POLYAMIDE, POLYKETONE AND NOVOLAC RESIN

(30) Priorité: 13.04.2010 FR 1001543
(43) Date de publication de la demande: 20.02.2013
(73) Titulaire: PERFORMANCE POLYAMIDES S.A.S., 75009 Paris (FR)
(72) Inventeur: VERGELATI, Caroll, F-38118 Saint Baudille De La Tour (FR); TOURAUD, Franck, F-38780 Eyzin Pinet (FR); ANDRES, Olivier, F-69780 Mions (FR)
(74) Mandataire: BASF IP Association
(86) Numéro de dépôt international: PCT/EP2011/055771
(87) Numéro de publication internationale: WO 2011/128358

(56) Documents cités:
- WO-A1-2008/055872
- GB-A- 2 291 062
- US-A- 5 274 040
- US-A1- 2003 199 607

## Description

La présente invention concerne une composition thermoplastique à base de polyamide et de polycétone présentant un excellent compromis de résistances mécaniques et de stabilité dimensionnelle. La composition comprend notamment de la résine novolaque et éventuellement des charges de renfort ou de remplissage. La composition est préférentiellement une composition à mouler, par exemple sous forme de granulés ou de poudre, servant à la fabrication d'articles par un procédé de moulage par injection.

Les polyamides techniques sont utilisés pour la réalisation de nombreux articles dans différents domaines, comme le domaine de l'automobile, où des propriétés spécifiques de rigidité, de résistance aux chocs, de stabilité dimensionnelle, en particulier à température relativement élevée, d'aspect de surface, de densité et de poids sont particulièrement recherchées. Le choix d'un matériau pour une application donnée est généralement guidé par le niveau de performances exigées vis-à-vis de certaines propriétés et par son coût. On cherche en effet toujours de nouveaux matériaux susceptibles de répondre à un cahier des charges en termes de performance et/ou de coûts.

Il est connu d'utiliser par ailleurs la résine novolaque dans des compositions polyamide pour diminuer leur reprise en eau et accroitre la stabilité dimensionnelle des articles mis en forme. Toutefois, la résine novolaque induit une diminution des propriétés mécaniques de la matrice polyamide, notamment leurs résistances. Il existait ainsi un besoin de mettre au point des compositions polyamides présentant un très bon compromis entre la reprise en eau et les propriétés mécaniques.

La demanderesse vient de découvrir de manière tout a fait surprenante que l'utilisation d'une polycétone dans une composition polyamide comprenant une résine novolaque permettait l'obtention de nouveaux compromis de propriétés quant à la maîtrise de la stabilité dimensionnelle dont la signature sur le matériau est une meilleure inhibition de l'absorption d'eau, et de bien meilleures propriétés mécaniques.

La présente invention concerne ainsi une composition obtenue par mélange en fondu d'au moins les composés suivants :
- 30 à 95 % en poids de polyamide ;
- 1 à 20 % en poids de polycétone ; et
- 1 à 20 % en poids de résine novolaque, par rapport au poids total de la composition ;
caractérisée en ce que la polycétone est un copolymère de l'éthylène et de l'oxyde de carbone ou un copolymère de l'éthylène, du propylène et de l'oxyde de carbone..

On observe en effet que contrairement à ce que l'on pouvait attendre dans le domaine technique des formulations polyamides que l'effet négatif bien connu de la novolaque sur certaine des propriétés mécaniques n'était pas observé par la combinaison d'action de la résine novolaque et de la polycétone sur la matrice polyamide. Cette action synergie permettait au surplus d'augmenter lesdites propriétés par rapport à ce qu'il était connu précédemment.

L'invention concerne également l'utilisation combinée d'une résine novolaque et d'une polycétone comme agent de renfort des propriétés mécaniques du polyamide, notamment pour augmenter la contrainte à la rupture d'une composition polyamide. L'invention concerne par ailleurs l'utilisation combinée d'une résine novolaque et d'une polycétone pour la fabrication d'un polyamide modifié présentant des propriétés mécaniques augmentées. L'invention concerne aussi une composition comprenant au moins de la résine novolaque et une polycétone, destinée à être mélangée à du polyamide.

Le polyamide de l'invention peut être un polyamide ou copolyamide semi-cristallins ou amorphes, tels que les polyamides aliphatiques, polyamides semi-aromatiques et plus généralement, les polyamides linéaires obtenus par polycondensation entre un diacide aliphatique ou aromatique, et une diamine primaire aromatique ou aliphatique, les polyamides obtenus par condensation d'un lactame, d'un aminoacide ou les polyamides linéaires obtenus par condensation d'un mélange de ces différents monomères.

Plus précisément, ces copolyamides peuvent être, par exemple, le polyadipamide d'hexaméthylène, les polyphtalamides obtenus à partir d'acide téréphtalique et/ou isophtalique, les copolyamides obtenus à partir d'acide adipique, d'hexaméthylène diamine et de caprolactame.

Le polyamide est préférentiellement choisi dans le groupe comprenant les polyamides obtenus par polycondensation d'au moins un diacide carboxylique linéaire avec une diamine linéaire ou cyclique comme le PA 6.6, PA 6.10, PA 6.12, PA 12.12, PA 4.6, ou entre au moins un diacide carboxylique aromatique et une diamine linéaire ou aromatique comme les polytéréphtalamides, polyisophtalamides, polyaramides, les polyamides obtenus par polycondensation d'au moins un aminoacide sur lui-même, l'amino-acide pouvant être généré par l'ouverture hydrolytique d'un cycle lactame tels que, par exemple PA 6, PA 7, PA 11, PA 12.

La composition de l'invention peut également comprendre les copolyamides dérivés notamment des polyamides ci-dessus, ou les mélanges de ces polyamides ou copolyamides.

Les polyamides préférés sont choisis dans le groupe comprenant : le PA 66, le PA 610, le PA 612, le PA 6.66, le PA 46, le MXD6, le PA 66/6T, le PA 6, le PA 11, et le PA 12. On préfère notamment les polyamides 6.

On utilise généralement des polyamides de poids moléculaires adaptés aux procédés de moulage par injection, bien que l'on puisse utiliser aussi des polyamides de plus faibles ou de plus hautes viscosités.

Le polyamide peut notamment être un polymère comprenant des chaînes macromoléculaires étoiles ou H, branché, ramifié, hyper-ramifié, et le cas échéant des chaînes macromoléculaires linéaires. Les polymères comprenant de telles chaînes macromoléculaires étoiles ou H sont par exemple décrits dans les documents FR2743077, FR2779730, US5959069, EP0632703, EP0682057 et EP0832149.

Le polyamide peut être un polymère de type arbre statistique, de préférence un copolyamide présentant une structure arbre statistique. Ces copolyamides de structure arbre statistique ainsi que leur procédé d'obtention sont notamment décrits dans le document WO99/03909. La matrice de l'invention peut également être une composition comprenant un polymère thermoplastique linéaire et un polymère thermoplastique étoile, H et/ou arbre tels que décrits ci-dessus. La matrice de l'invention peut également comprendre un copolyamide hyperbranché du type de ceux décrits dans le document WO 00/68298. La composition de l'invention peut également comprendre toute combinaison de polymère thermoplastique linéaire, étoile, H, arbre, copolyamide hyperbranché tel que décrit ci-dessus.

Le polyamide peut présenter un nombre de groupements terminaux acides compris entre 30 et 100 meq/kg. Le polyamide peut présenter un nombre de groupements terminaux aminés compris entre 30 et 100 meq/kg.

La composition selon l'invention présente de 30 à 95 % en poids de polyamide, préférentiellement de 40 à 80 % en poids, par rapport au poids total de la composition.

La polycétone utilisée selon la présente invention peut être aliphatique et/ou aromatique.

Les polycétones aliphatiques sont des polymères comprenant substantiellement une mole d'oxyde de carbone pour chaque mole de monomère insaturé. Ce monomère peut être choisi parmi les alpha-oléfines ayant de 2 à 12 atomes de carbone ou leurs dérivés de substitution. Il peut aussi être choisi parmi le styrène ou ses dérivés obtenus par substitution avec des alkyles tels que les méthylstyrènes, éthylstyrène et isopropylstyrène. De préférence, les polycétones sont des copolymères de l'éthylène et de l'oxyde de carbone ou des copolymères de l'éthylène, du propylène et de l'oxyde de carbone.

Quand les polycétones sont des copolymères de l'éthylène, d'un deuxième monomère et de l'oxyde de carbone, il peut y a au moins deux motifs éthylène pour un motif du deuxième monomère et de préférence 10 à 100.

Les polycétones peuvent être représentées par la formule :

- (CO-CH₂-CH₂)x- (CO-A)_{y}-

dans laquelle A désigne un monomère insaturé ayant au moins 3 atomes de carbone, tel que par exemple le radical propylène -CH₂-CH(CH₃)-, phénylène - C₆H₄-, aryléther -C6H₄-O-C6H₄-. Le rapport x/y peut être au moins 2. Lesdits motifs peuvent être répartis au hasard dans la chaîne de polycétone.

Les masses molaires en nombre peuvent être comprises entre 1000 et 200000 g/mol, avantageusement entre 20000 et 90000 g/mol ; mesurées par chromatographie à perméation de gel. Les températures de fusion peuvent être comprises entre 175 et 300° C, le plus souvent entre 200 et 270° C.

Des synthèses de ces polycétones sont décrites dans les brevets US4843144, et US4880903 et US3694412. On préfère notamment les polycétones aliphatiques obtenues par réaction de l'éthylène et/ou du propylène gazeux avec du monoxyde de carbone via une catalyse au Palladium (II).

La composition selon l'invention comprend entre 1 à 20 % en poids de polycétone, par rapport au poids total de la composition.

On entend généralement par résine novolaque, une résine phénolique dont le rapport formaldéhyde/phénol est inférieur à 1 et qui, de ce fait, reste normalement thermoplastique jusqu'à ce qu'elle soit chauffée avec une quantité appropriée d'un composé, par exemple formaldéhyde ou hexaméthylènetétramine, susceptible de donner des liaisons supplémentaires, par conséquent de donner un produit infusible.

Les résines novolaques généralement des produits de condensation de composés phénoliques avec des aldéhydes ou cétones. Ces réactions de condensation sont généralement catalysées par un acide ou une base.

Le polyamide selon l'invention peut comprendre une ou plusieurs types de résine novolaque différentes.

Les résines novolaques présentent généralement un degré de condensation compris entre 2 et 15.

Les composés phénoliques peuvent être choisis seuls ou en mélange parmi le phénol, le crésol, le xylénol, le naphtol, les alkylphénols, comme le butyl-phénol, le terbutyl-phénol, l'isooctyl-phénol, le nitrophénol, le phénylphénol, le résorcinol ou le biphénol A ; ou tout autre phénol substitué.

L'aldéhyde le plus fréquemment utilisé est le formaldéhyde. On peut toutefois en utiliser d'autres, tels que l'acétaldéhyde, le para-formaldéhyde, le butyraldéhyde, le crotonaldéhyde, le glyoxal, et le furfural. Comme cétone, on peut utiliser l'acétone, la méthyle éthyle cétone ou l'acétophénone. L'aldéhyde et/ou la cétone peuvent éventuellement porter un autre groupement fonctionnel, tel que par exemple une fonction acide carboxylique. On peut notamment citer à cet effet l'acide glyoxylique ou l'acide lévulinique.

Selon un mode de réalisation particulier de l'invention, la résine novolaque est un produit de condensation du phénol et du formaldéhyde.

Les résines novolaques utilisées ont avantageusement un poids moléculaire compris entre 500 et 3000 g/mol, de préférence entre 800 et 2000 g/mol.

Comme résine novolaque commerciale, on peut citer notamment les produits commerciaux Durez®, Vulkadur® ou Rhenosin®.

La composition selon l'invention comprend entre 1 à 20 % en poids de résine novolaque, notamment de 1 à 10 % en poids, par rapport au poids total de la composition.

La composition selon l'invention peut en outre comprendre des charges et/ou additifs classiquement utilisés pour la fabrication de compositions polyamides. Ainsi, on peut citer les charges de renfort et de remplissage, les lubrifiants, les agents ignifugeants, les plastifiants, les agents nucléants, les agents modificateurs de chocs, les catalyseurs, les stabilisants lumière et/ou thermique, les antioxydants, les antistatiques, les colorants, les matifiants, les additifs d'aide au moulage ou autres additifs conventionnels.

La composition selon l'invention peut également comprendre des charges de renfort ou de remplissages, comme par exemple des charges fibreuses et/ou des charges non fibreuses.

Comme charges fibreuses on peut citer les fibres de verre, les fibres de carbone, les fibres naturelles, les fibres d'aramides, et les nanotubes, notamment de carbone. On peut citer comme fibres naturelles le chanvre et le lin. Parmi les charges non fibreuses on peut notamment citer toutes les charges particulaires, lamellaires et/ou les nanocharges exfoliables ou non exfoliables comme l'alumine, le noir de carbone, les argiles alumino-silicates, les montmorillonites, le phosphate de zirconium, le kaolin, le carbonate de calcium, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre.

Il est parfaitement possible selon l'invention que la composition comprenne plusieurs types de charges de renfort. De façon préférentielle, la charge la plus utilisée peut être les fibres de verres, du type dit coupé (chopped), notamment ayant un diamètre compris entre 7 et 14 µm. Ces charges peuvent présenter un ensimage surfacique qui assure l'adhésion mécanique entre les fibres et la matrice polyamide.

La concentration pondérale des charges de renfort ou de remplissage est comprise avantageusement entre 1 % et 60 % en poids par rapport au poids total de la composition, de préférence entre 15 et 50 %.

On peut notamment ajouter à la composition polyamide des agents modifiants la résistance aux chocs. Ce sont généralement des polymères d'élastomères qui peuvent être utilisés à cet effet. Les agents modificateurs de la résilience sont généralement définis comme ayant un module de traction ASTM D-638 inférieur à environ 500 MPa. Des exemples d'élastomères convenables sont les éthylène-ester acrylique-anhydride maléïque, les ethylène-propylène-anhydride maléïque, les ethylène-propylène-diène momonère (EPDM) avec éventuellement un anhydride maléïque greffé. La concentration pondérale en élastomère est avantageusement comprise entre 0,1 et 30 % par rapport au poids total de la composition.

On préfère notamment les agents modificateurs de chocs comprenant des groupements fonctionnels réactifs avec le polyamide. On peut par exemple citer les terpolymères d'éthylène, ester acrylique et glycidyl méthacrylate, les copolymères d'éthylène et de butyl ester acrylate, les copolymères d'éthylène, n-butyl acrylate et glycidyl méthacrylate, les copolymères d'éthylène et d'anhydride maléique, les copolymères styrène-maléïmides greffés avec de l'anhydride maléique, les copolymères styrène-éthylène-butylène-styrène modifié avec de l'anhydride maléique, les copolymère styrène-acrylonitrile greffés anhydrides maléiques, les copolymères acrylonitrile butadiène styrène greffés anhydrides maléiques, et leurs versions hydrogénées. La proportion en poids de ces agents dans la composition totale est notamment comprise entre 0,1 et 40 %.

Ces charges et additifs peuvent être ajoutés au polyamide modifié par des moyens usuels adaptés à chaque charge ou additif, tel que par exemple lors de la polymérisation ou en mélange en fondu.

Les matériaux et compositions de l'invention sont généralement obtenus par mélange des différents constituants à chaud, par exemple dans une extrudeuse mono ou bivis, à une température suffisante pour maintenir la résine polyamide en milieu fondu ; ou a froid dans un mélangeur mécanique notamment. Généralement, le mélange obtenu est extrudé sous forme de joncs qui sont coupés en morceaux pour former des granulés. Les composés peuvent être ajoutés à n'importe quel moment du processus de fabrication du matériau plastique, notamment par mélange à chaud ou à froid avec la matrice plastique. L'addition des composés et des additifs peut être réalisée par ajout de ces composés dans la matrice plastique fondue sous forme pure ou sous forme de mélange concentré dans une matrice telle que par exemple une matrice plastique.

La composition est préférentiellement une composition à mouler, par exemple sous forme de granulés ou de poudre, servant notamment à la fabrication d'articles par un procédé de moulage par injection. La composition selon l'invention peut être utilisée pour tout procédé de mise en forme des matières plastiques, tels que par exemple les procédés de moulage, notamment le moulage par injection, le rotomoulage, le frittage, la coulée, ou d'extrusion comme l'extrusion soufflage et le filmage, ou encore les procédés de filage. L'invention concerne ainsi aussi des procédés de fabrication d'articles moulés ou extrudés par mise en forme d'une composition de l'invention.

La présente invention concerne notamment aussi un procédé de moulage par injection dans lequel on introduit dans un dispositif de moulage par injection une composition selon l'invention, notamment sous forme de granulés, et l'on procède au moulage.

L'utilisation des compositions selon l'invention est particulièrement intéressante dans le cadre de la fabrication d'articles pour l'industrie automobile, électrique ou électronique ou les articles destinés à contenir ou transporter des fluides tels que des réservoirs par exemple.

Le terme et/ou inclut les significations et, ou, ainsi que toutes les autres combinaisons possibles des éléments connectés à ce terme. D'autres détails ou avantages de l'invention apparaîtront plus clairement au vu des exemples donnés ci-dessous uniquement à titre indicatif.

### PARTIE EXPERIMENTALE

### Exemple 1 : Fabrication des compositions

Des compositions à base de polyamide 6 -PA- (référence S27BL de Rhodia Engineering Plastics, viscosité relative H₂S04 de 147 ml/g) et différentes proportions de polycétone aliphatique -PK- (Carilon D26HM100® Shell Chemicals ) et de résine novolaque -NO- (Phénol-Formaldéhyde Rhenosin PR95) sont obtenues par extrusion sur une mini extrudeuse.

Les caractéristiques de la mise en œuvre sont les suivantes :
Mini Extrudeuse double vis : PRISM 25D, vis de 16 mm, L/D = 25 avec :
- un profil de température : de 225°C pour PA6 et 270°C pour PA66
- vitesse de vis (rpm): 300
- force moteur (N.m) : 20
- dégazage: air

Les joncs sortis de l'extrudeuse sont coulés dans un bac de refroidissement à eau et ensuite granulés. Des éprouvettes sont réalisées par moulage par injection de la manière suivante :
Presse ARBURG allrounder 350-90 220 D, vis de 30 mm, L/D = 15
Force de verrouillage max : 350 kN
T (°C) fourreau: de 250 à 275
T (°C) moule : 80
Vitesse d'injection (mm/s) : 87,7
Pression d'injection (bar) : 42
Pression de maintien (bar) : 28
Contre pression (bar) : 4
Vitesse de vis (rpm) : 195

### Exemple 2 : analyse des formulations

Différents tests ont été effectués sur les formulations produites dans l'exemple 1. Les résultats sont exprimés dans le tableau 1 suivant :

**Tableau 1**

| **Systèmes** | | | | | Reprise en eau à l'équilibre (%pds) | Module Young (MPa) | Contrainte seuil (MPa) | Contrainte à la rupture (%) | Résilience @HR50 (kJ/m²) |
|---|---|---|---|---|---|---|---|---|---|
| **PA** | **PK** | **NO** | **Ex.** | | | | | | |
| *100* | *0* | 0 | ***C1*** | | 3,6 | 3017 | 73,1 | 58,6 | 67 |
| 98 | 2 | 0 | **C2** | | 3,5 | 3058 | 72,9 | 72,4 | 195 |
| 96 | 4 | 0 | **C3** | | 3,5 | 2974 | 70,4 | 71,7 | 197 |
| 94 | 6 | 0 | **C4** | | 3,5 | 3011 | 70,0 | 70,7 | 197 |
| 92 | 8 | 0 | **C5** | | 3,4 | 2931 | 68,5 | 68,7 | 189 |
| 98 | 0 | 2 | **C6** | | 3,3 | 2933 | 74,2 | 62,7 | 53 |
| 96 | 0 | 4 | **C7** | | 3,3 | 2869 | 75,2 | 61,0 | 32 |
| 94 | 0 | 6 | **C8** | | 3,1 | 2778 | 78,1 | 62,5 | 25 |
| 92 | 0 | 8 | **C9** | | 2,9 | 2690 | 79,5 | 63,8 | 14 |
| 96 | 2 | 2 | **1** | | 3,4 | 3372 | 78,5 | 68,4 | 182 |
| 92 | 4 | 4 | **2** | | 3,0 | 4005 | 83,9 | 78,7 | n.m. |
| 88 | 6 | 6 | **3** | | 2,8 | 3865 | 83,5 | 77,2 | n.m. |

| | | | | | | | | | |
|---|---|---|---|---|---|---|---|---|---|
| n.m= non mesuré | | | | | | | | | |

Les proportions de PA, PK et NO sont exprimés en pourcentage en poids par rapport au poids total de la composition. Les mesures d'absorption d'eau sont réalisées selon la norme ISO 1110. Le module d'Young est mesuré selon la norme ISO527. La contrainte seuil est mesurée selon la norme ISO527. La contrainte à la rupture est mesurée selon la norme ISO527. Les mesures de résistance à l'impact sont réalisées selon la norme ISO 179-1/1eA.

## Revendications

1. Composition obtenue par mélange en fondu d'au moins les composés suivants :
- 30 à 95 % en poids de polyamide ;
- 1 à 20 % en poids de polycétone ; et
- 1 à 20 % en poids de résine novolaque, par rapport au poids total de la composition ;
**caractérisée en ce que** la polycétone est un copolymère de l'éthylène et de l'oxyde de carbone ou un copolymère de l'éthylène, du propylène et de l'oxyde de carbone.

2. Composition selon la revendication 1, **caractérisée en ce que** le polyamide est choisi dans le groupe constitué par : le PA 66, le PA 610, le PA 612, le PA 6.66, le PA 46, le MXD6, le PA 66/6T, le PA 6, le PA 11, et le PA 12.

3. Composition selon l'une quelconque des revendications 1 à 2, **caractérisée en ce qu'**elle comprend des charges de renfort ou de remplissage et/ou des agents modificateurs de chocs.

4. Utilisation d'une résine novolaque et d'une polycétone comme agent de renfort des propriétés mécaniques du polyamide.

5. Procédé de moulage par injection dans lequel on introduit dans un dispositif de moulage par injection une composition selon l'une quelconque des revendications 1 à 3, notamment sous forme de granulés, et l'on procède au moulage.

## Patentansprüche

1. Zusammensetzung, erhalten durch Schmelzemischen mindestens der folgenden Verbindungen:
- 30 bis 95 Gew.-% Polyamid;
- 1 bis 20 Gew.-% Polyketon und
- 1 bis 20 Gew.-% Novolakharz, bezogen auf das Gesamtgewicht der Zusammensetzung;
**dadurch gekennzeichnet, dass** es sich bei dem Polyketon um ein Copolymer von Ethylen und Kohlenmonoxid oder ein Copolymer von Ethylen, Propylen und Kohlenmonoxid handelt.

2. Zusammensetzung nach Anspruch 1, **dadurch gekennzeichnet, dass** das Polyamid aus der Gruppe bestehend aus PA 66, PA 610, PA 612, PA 6.66, PA 46, MXD6, PA 66/6T, PA 6, PA 11 und PA 12 ausgewählt ist.

3. Zusammensetzung nach einem der Ansprüche 1 bis 2, **dadurch gekennzeichnet, dass** sie verstärkende oder streckende Füllstoffe und/oder Schlagzähigkeitsmodifikatoren umfasst.

4. Verwendung eines Novolakharzes und eines Polyketons als Mittel zur Verbesserung der mechanischen Eigenschaften des Polyamids.

5. Spritzgießverfahren, bei dem man eine Zusammensetzung nach einem der Ansprüche 1 bis 3, insbesondere in Form von Granulat, in eine Spritzgießvorrichtung einträgt und spritzgießt.

## Claims

1. A composition obtained by melt blending at least the following compounds:
- 30% to 95% by weight of polyamide;
- 1% to 20% by weight of polyketone; and
- 1% to 20% by weight of novolak resin, with respect to the total weight of the composition;
wherein the polyketone is a copolymer of ethylene and carbon oxide or a copolymer of ethylene, propylene and carbon oxide.

2. The composition according to claim 1, wherein the polyamide is chosen from the group consisting of: PA 66, PA 610, PA 612, PA 6.66, PA 46, MXD6, PA 66/6T, PA 6, PA 11 and PA 12.

3. The composition according to either of claims 1 and 2, which comprises reinforcing or bulking fillers and/or impact modifiers.

4. The use of a novolak resin and of a polyketone as agent for reinforcing the mechanical properties of the polyamide.

5. An injection molding process in which a composition according to any one of claims 1 to 3, in particular in the form of granules, is introduced into an injection molding device and the molding is carried out.
